(19) Europäisches Patentamt
European Patent Office
Office européen des brevets

(11) EP 4 769 006 A1

(12) EUROPEAN PATENT APPLICATION

(43) Date of publication:
01.07.2026 Bulletin 2026/27

(21) Application number: 25224397.7

(22) Date of filing: 17.12.2025

(51) International Patent Classification (IPC):
G02B 27/00 (2006.01)     G02B 27/01 (2006.01)

(52) Cooperative Patent Classification (CPC):
G02B 27/0081; G02B 27/0093; G02B 27/0101

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 27.12.2024 GB 202419093

(71) Applicant: Nokia Technologies Oy
02610 Espoo (FI)

(72) Inventors:
• SALMIMAA, Marja Pauliina
  Tampere (FI)
• JÄRVENPÄÄ, Toni Johan
  Akaa (FI)

(74) Representative: Nokia EPO representatives
Nokia Technologies Oy
Karakaari 7
02610 Espoo (FI)

(54) OPTICAL APPARATUS

(57) Examples of the disclosure relate to optical apparatus that enable tracking of a user of the apparatus. The apparatus comprises a light guide arranged to enable light to be guided through the light guide via internal reflections, first in-coupling diffractive means configured to in-couple one or more input beams of light with a first wavelength range into the light guide, second in-coupling diffractive means configured to in-couple one or more input beams of light with a second wavelength range into the light guide, expanding diffractive means configured to expand the one or more input beams of light, and out-coupling diffractive means configured to out-couple the expanded beams of light from the light guide so as to provide a first exit pupil for the first wavelength range and a second exit pupil for the second wavelength range.

Fig. 3

EP 4 769 006 A1

## Description

TECHNOLOGICAL FIELD

Examples of the disclosure relate to optical apparatus. Some relate to optical apparatus that enable tracking of a user of the apparatus.

BACKGROUND

Head up displays can be used in vehicles or other devices to display images or other information to a user. It can also be useful to track or monitor the user. Infra-red light can be used for tracking or monitoring the user.

BRIEF SUMMARY

According to various, but not necessarily all, examples of the disclosure there may be provided an apparatus comprising:

a light guide arranged to enable light to be guided through the light guide via internal reflections;
first in-coupling diffractive means configured to in-couple one or more input beams of light with a first wavelength range into the light guide;
second in-coupling diffractive means configured to in-couple one or more input beams of light with a second wavelength range into the light guide;
expanding diffractive means configured to expand the one or more input beams of light; and
out-coupling diffractive means configured to out-couple the expanded beams of light from the light guide so as to provide a first exit pupil for the first wavelength range and a second exit pupil for the second wavelength range.

The first wavelength range may comprise a visible wavelength range and the second wavelength range comprises an invisible wavelength range.

The invisible light may comprise infra-red light.

The position of at least one of the first exit pupil or the second exit pupil may be adjustable.

The first exit pupil and the second exit pupil may be at least partially overlapping.

The light with the second wavelength range may be provided as at least one of:

structured light;
a grid;
a beam.

The light with a second wavelength range may be arranged for illuminating one or more objects near the apparatus.

The first in-coupling diffractive means and the second in-coupling diffractive means may have at least one of:

different fill ratio;
different depth;
different period;
different slant angles;
different materials.

The light guide may comprise a stack of layers and multiple interfaces between respective layers, wherein the respective layers may be arranged to enable light to be guided through the light guide via internal reflections.

A thin film material may be provided at the interfaces.

The first in-coupling diffractive means and the second in-coupling diffractive means may be provided on a same surface of the light guide.

The first in-coupling diffractive means and the second in-coupling diffractive means may be provided adjacent each other.

The first in-coupling diffractive means and the second in-coupling diffractive means may be provided on different surfaces of the light guide.

The second in-coupling diffractive means may be provided at least partially overlapping the first in-coupling diffractive means.

The apparatus may comprise a third in-coupling diffractive means configured to in-couple light within the first wavelength range that has passed through at least part of the light guide.

The apparatus may comprise a first image generating unit configured to provide the one or more input beams of light with a first wavelength range and a second image generating unit configured to provide the one or more input beams of light with a second wavelength range.

The second image generating unit may be adjustable to enable an incident angle for the beams of light with a second wavelength range relative to the second in-coupling diffractive means to be adjusted.

At least one of the first image generating unit and the second image generating unit may be adjustable to enable a position of an image to be adjusted.

The respective image generating units may comprise one or more of:

reflective liquid crystal on silicon;
spatial light modulator;
digital micromirror device;
digital light processing.

According to various, but not necessarily all, embodiments there may be provided an module, a device, a vehicle or cab for a vehicle comprising an apparatus as described herein.

According to various, but not necessarily all, embodiments there is provided an apparatus comprising:

at least one processor; and

at least one memory including computer program code;

the at least one memory storing instructions that, when executed by the at least one processor, cause the apparatus to perform at least a part of one or more methods described herein.

According to various, but not necessarily all, embodiments there is provided an apparatus comprising means for performing at least part of one or more methods described herein. The description of a function and/or action should additionally be considered to also disclose any means suitable for performing that function and/or action. Functions and/or actions described herein can be performed in any suitable way using any suitable method.

According to various, but not necessarily all, embodiments there is provided examples as claimed in the appended claims.

While the above examples of the disclosure and optional features are described separately, it is to be understood that their provision in all possible combinations and permutations is contained within the disclosure. It is to be understood that various examples of the disclosure can comprise any or all the features described in respect of other examples of the disclosure, and vice versa. Also, it is to be appreciated that any one or more or all the features, in any combination, may be implemented by/comprised in/performable by an apparatus, a method, and/or computer program instructions as desired, and as appropriate. The description of a function should additionally be considered to also disclose any means suitable for performing that function

BRIEF DESCRIPTION

Some examples will now be described with reference to the accompanying drawings in which:

FIG. 1 shows a head up display;
FIG. 2 shows an apparatus;
FIG. 3 shows a head up display;
FIG. 4 shows total internal reflection;
FIGS. 5A to 5D show an example light guide;
FIG. 6 shows an example apparatus;
FIG. 7 shows an example apparatus;
FIG. 8 shows an example apparatus;
FIG. 9 shows an example apparatus;
FIG. 10 shows an example apparatus;
FIG. 11 shows an example apparatus;
FIGS. 12A and 12B show an example head up display;
FIGS. 13A to 13D show an example head up display;
FIGS. 14A to 14D show example image generating units; and
FIGS. 15A and 15B show example projected patterns.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Corresponding reference numerals are used in the figures to designate corresponding features. For clarity, all reference numerals are not necessarily displayed in all figures.

DETAILED DESCRIPTION

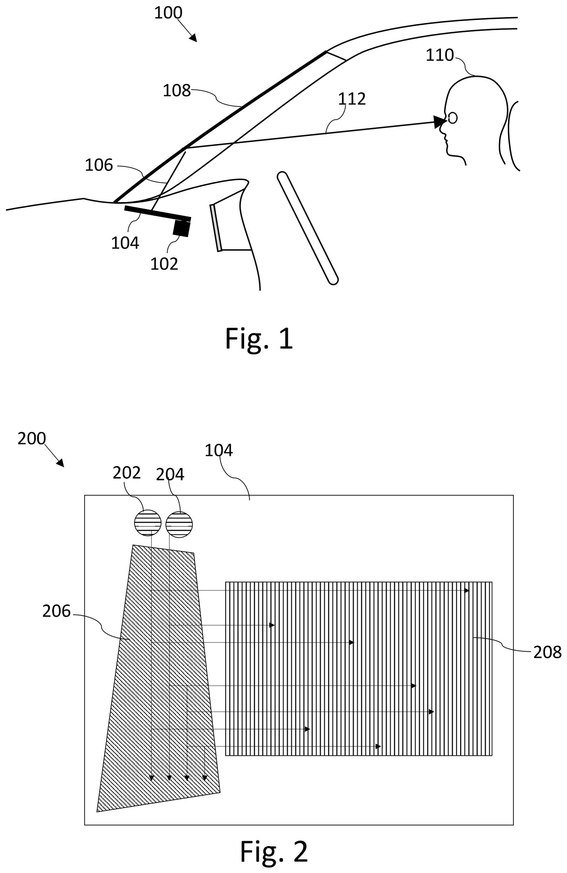

Fig. 1 shows a head up display (HUD) 100 that can implement examples of the disclosure. The HUD 100 could be provided in a vehicle such as a terrestrial vehicle, an aerial vehicle, an aquatic vehicle or any other suitable type of vehicle.

The HUD 100 comprises an image generating unit 102 and a light guide 104. The image generating unit 102 is positioned to provide an input beam of light to the light guide 104. The light guide 104 is configured to expand the input beam of light and provides an expanded beam of light 106 as an output. The expanded beam of light 106 is directed towards a windshield 108. The expanded beam of light 106 is reflected from the windshield 108 towards a user 110. In other examples other types of optical components can be used to control the out-coupled expanded beam of light 106. The other types of optical components can be used instead of or in addition to the windshield. The other types of optical components could comprise lenses, curved mirrors, planar mirrors, or any other suitable types of optical components.

If the image generating unit 102 provides light in a visible wavelength range then the reflected beam 112 provides a virtual image for the user 110. If the image generating unit 102 provides light in an invisible range, such as infra-red (IR) then the reflected beam 112 can be used to illuminate the user 110 or a part of the user 110 for tracking or monitoring purposes. For example, the IR light could be used to track the position of the user 110 or to perform identification of the user 110, or for any other suitable purpose.

It could be beneficial to provide a HUD 100 that can provide both virtual images for the user 110 and also enable illumination of the user 110 for tracking or monitoring purposes.

Fig. 2 schematically shows an apparatus 200 that can be used in examples of the disclosure. The apparatus 200 could be provided within a HUD 100 for use in a vehicle as shown in Fig. 1 or within any other suitable device. The apparatus 200 can enable both virtual images for a user 110 and illumination of the user 110 to be provided. These can be provided simultaneously.

The apparatus 200 comprises a light guide 104. The light guide 104 is arranged to enable light to be guided through the light guide 104 via internal reflections.

The light guide 104 can comprise an exit pupil expander. The exit pupil expander is configured to replicate an exit pupil from an image generating unit or other optical arrangement. The image generating unit could be a display means such as a light engine, projection engine, or a picture generating unit.

The apparatus 200 also comprises first in-coupling diffractive means 202, second in-coupling diffractive means 204, expanding diffractive means 206, and out-coupling diffractive means 208.

The respective diffractive means can comprise any means that can be configured to diffract the input beams of light. The diffractive means can comprise any one or more of a diffractive optical element, diffractive structure, diffraction gratings, holographic gratings, Bragg gratings, rulings, ridges, surface relief diffractive gratings or any suitable optical component or feature having a periodic structure that splits and diffracts light into several beams travelling in different directions.

The first in-coupling diffractive means 202 is configured to in-couple one or more input beams of light with a first wavelength range into the light guide 104. The second in-coupling diffractive means 204 is configured to in-couple one or more input beams of light with a second wavelength range into the light guide 104.

In the example of Fig. 2 the first in-coupling diffractive means 202 and the second in-coupling diffractive means 204 are provided adjacent to each other. The first in-coupling diffractive means 202 and the second in-coupling diffractive means 204 can be provided on the same surface of the light guide 104. In other examples the first in-coupling diffractive means 202 and the second in-coupling diffractive means 204 could be provided on different surfaces of the light guide 104. If the first in-coupling diffractive means 202 and the second in-coupling diffractive means 204 are provided on different surfaces this could allow the first in-coupling diffractive means 202 and the second in-coupling diffractive means 204 to be overlapping or partially overlapping. If the first in-coupling diffractive means 202 and the second in-coupling diffractive means 204 are provided on different surfaces the second in-coupling diffractive means can be arranged so that light with the first wavelength range that is in-coupled by the second in-coupling diffractive means 204 mainly escapes the light guide 104.

The respective in-coupling diffractive means 202, 204 can have different parameters compared to each other. The different parameter can enable the respective in-coupling diffractive means 202, 204 to be optimized, or substantially optimized, for in-coupling light with the respective wavelength ranges. For instance, the first in-coupling diffractive means 202 and the second in-coupling diffractive means 204 could have any one or more of different fill ratios, different depths, different periods, different profiles, different materials, different slant angles, or any other suitable parameters or combinations of parameters.

The first wavelength range can comprise a visible wavelength range and the second wavelength range can comprise an invisible wavelength range. For example, the first wavelength range could comprise red and/or green and/or blue light and the second wavelength range could comprise IR light. The respective wavelengths could be centered around 625 nm, 525 nm, and 460 nm for the first wavelength range and around 850 nm for the second wavelength range. Other wavelengths ranges could be used in other examples.

The light with the respective wavelength ranges can be provided in any suitable form. In some examples the light with the first wavelength range can comprise one or more images or other information that is to be displayed to a user 110. In some examples the light with the second wavelength range can comprise structured light, a grid, a beam or any other suitable form. The pattern structure of a beam of light with the second wavelength range can be controlled through the angle of internal refection of the second in-coupling diffractive means 204 or via any other suitable means.

The light with a second wavelength range can be arranged for illuminating one or more objects near the apparatus 200. An object near the apparatus 200 could be a user of the apparatus 200 or the user of a device comprising the apparatus 200 or an object other than the user. For example, the light with a second wavelength range could be arranged for illuminating a user 110 of a vehicle. The illumination of the object can be used for identification or tracking of the object. In some examples an object near the apparatus 200 could be an object within a few meters of the apparatus 200.

The input beams of light can be provided from an image generating unit or any other suitable source. In some examples a first image generating unit can be configured to provide the one or more input beams of light with a first wavelength range and a second image generating unit can be configured to provide the one or more input beams of light with a second wavelength range. In other examples both the input beams of light with a first wavelength range and the input beams of light with a second wavelength range can be provided by the same image generating unit.

In some examples at least one of the image generating units can be adjustable to enable a position of an image to be adjusted.

In examples where a first image generating unit is configured to provide the one or more input beams of light with a first wavelength range and a second image generating unit is configured to provide the one or more input beams of light with a second wavelength range the second image generating unit can be adjustable to enable an incident angle for the beams of light with a second wavelength range relative to the second in-coupling diffractive means to be adjusted.

The respective image generating units could comprise reflective liquid crystal on silicon display, spatial light modulator, digital micromirror device, digital light processing device, or any other suitable means.

The first in-coupling diffractive means 202 can be positioned within the light guide 104 so that, in use, the first in-coupling diffractive means 202 can be positioned adjacent to an image generating unit or any other suitable source. In some examples the second in-coupling diffractive means 204 can also be positioned within the light guide 104 so that, in use, the second in-coupling diffractive means 204 can be positioned adjacent to an image generating unit or any other suitable source. In other examples the second in-coupling diffractive means 204 could be positioned in a different location, for example on an opposing side of the light guide 104.

The expanding diffractive means 206 is configured to expand the one or more input beams of light. The expanding diffractive means 206 is configured to expand both the one or more input beams of light with a first wavelength range and the one or more input beams of light with a second wavelength range. The expanding diffractive means 206 is configured to expand the one or more input beams of light in at least one dimension. In the expanding diffractive means 206 the in-coupled beams of light are split into two orders with every interaction with the expanding diffractive means 206. The split sections of the beam travel in different directions and continue splitting and so expand the exit pupil of the input beams of light.

The expanding diffractive means 206 can be positioned between the respective in-coupling diffractive means 202, 204 and the out-coupling diffractive means 208.

The out-coupling diffractive means 208 is configured to out-couple the expanded beams of light from the light guide 104 so as to provide a first exit pupil for the first wavelength range and a second exit pupil for the second wavelength range.

The out-coupling diffractive means 208 is configured to out-couple the one or more beams of light from the light guide 104. The out-coupling diffractive means 208 can function in a similar manner to the expanding diffractive means 206 so that the expanded beam of light is split into two with every interaction with the out-coupling diffractive means 208. In some examples the out-coupling diffractive means 208 can be configured to expand the beam of light in a second dimension where the second dimension is perpendicular, or substantially perpendicular, to a dimension for which the expanding diffractive means expands the beam of light.

The apparatus 200 therefore provides two exit pupils. The two exit pupils are in two different wavelength ranges. In some examples the two exit pupils can be, at least partially overlapping.

The apparatus 200 can be arranged so that at least one of the first exit pupil or the second exit pupil is adjustable. Any suitable means could be used to adjust the position of the exit pupil, such as adjusting the input angle of the input beams of light.

In some examples the light guide 104 can comprise a stack of layers and multiple interfaces between respective layers. The respective layers can be arranged to enable light to be guided through the light guide 104 via internal reflections. The respective in-coupling diffractive means 202, 204 can be provided on the same layer or on different layers within the stack.

In some examples a thin film material can be provided at one or more of the interfaces between the multiple layers. Different thin film materials can be used at different interfaces. This can enable different interfaces to allow different wavelengths of light with different internal reflection angles to either totally reflect or to pass through. The thin film materials that are used in the interfaces can be selected to provide appropriate optical properties.

The thickness of the thin film material can be substantially larger than the wavelength of the light to reduce any light leakage through frustrated total internal reflection.

The thin film materials can be chemically compatible with the surrounding materials. For example, adhesion properties between the thin film materials and adjacent layers of the light guide 104 should be strong enough so that the layers of the light guide 104 will not delaminate over the operating conditions.

Any suitable material can be used for the light guide 104. The materials that are used for the light guide 104 have to provide for total internal reflection for wavelength and internal reflection angle ranges of interest. In addition to this the materials for the light guide 104 can be selected so that they will not cause substantial optical absorption or scattering for the light of the wavelengths of interest. In addition to this the materials used for the light guide 104 can be selected to provide good mechanical strength. In examples where the light guide 104 comprises a stack of layers different materials can be used for different layers of the stack. The different materials can have different optical properties.

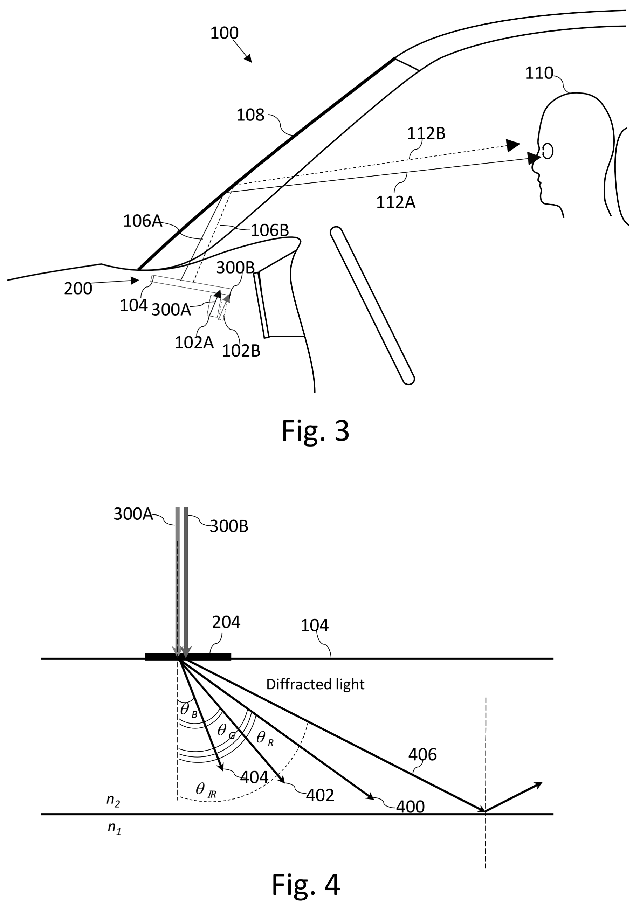

Fig. 3 shows a HUD 100 that could comprise an apparatus 200 as shown in Fig. 2. The HUD 100 could be provided in a vehicle such as a terrestrial vehicle, an aerial vehicle, an aquatic vehicle or any other suitable type of vehicle.

The HUD 100 comprises a first image generating unit 102A and a second image generating unit 102B. The first image generating unit 102A provides a first input beam of light 300A. The first input beam of light 300A has a first wavelength range. The first wavelength range can comprise a visible wavelength range. The second image generating unit 102B provides a second input beam of light 300B. The second input beam of light 300B has a second wavelength range. The second wavelength range is different to the first wavelength range. The second wavelength range can comprise an invisible wavelength range. The second wavelength range can comprise IR light. The second wavelength range could be centered around 850 nm.

The input beams of light 300A, 300B are provided as inputs to the light guide 104 of an apparatus 200.

The light guide 104 can comprise a first in-coupling diffractive means 202 and a second in-coupling diffractive means 204. The first in-coupling diffractive means is configured to in-couple the first input beam of light 300A. The second in-coupling diffractive means 204 is configured to in-couple the second input beam of light 300B.

The expanding diffractive means 206 of the light guide 104 is configured to expand the input beams of light 300A, 300B in the first direction and the out-coupling diffractive means 208 is configured to expand in the second direction and out-couple the expanded beams of light. The out-coupling diffractive means 208 provides a first expanded beam of light 106A and a second expanded beam of light 106B as an output. The first expanded beam of light 106A has a first wavelength range. The second expanded beam of light 106B has a second wavelength range.

In examples of the disclosure the expanded beams of light 106A, 106B are directed towards the windshield 108. The expanded beams of light 106A, 106B are reflected from the windshield 108 towards a user 110. In other examples, the expanded beams of light 106A, 106B are directed towards an additional optical component for windshield compensation, towards a separate combiner optics, or directly towards a user 110.

The first reflected beam 112A has a first wavelength range and can provide a virtual image for the user 110. The second reflected beam 112B has a second wavelength range and can provide illumination of the user 110.

The example apparatus 200 provides a first exit pupil for the first wavelength range and a second exit pupil for the second wavelength range. The exit pupils can be provided in different positions. For example, the exit pupil for the first wavelength range can be directed towards an eye position of the user 110 to enable the user 110 to view the virtual image. The exit pupil for the second wavelength range can be directed towards any suitable part of the user 110 to enable illumination for tracking and monitoring purposes.

The exit pupil for the first wavelength range is an area or volume in space where the full displayed virtual image can be viewed from. The exit pupil for the second wavelength range is an area or volume in space which is illuminated by the illumination beam or pattern of interest.

Fig. 4 shows total internal reflection for input beams of light 300A, 300B. The input beams of light 300A, 300B are in-coupled to the light guide 104 by the in-coupling diffractive means 204.

The light guide 104 is configured to use total internal reflection to guide the in-coupled beams of light through the light guide. The in-coupled beams of light will propagate through the light guide 104 if the minimum diffraction angle is larger than the critical angle of total internal reflection:

$$\theta_{IR} > sin^{-1}\left(\frac{n_1}{n_2}\right)$$

Where $n_1$ and $n_2$ are the refractive indices for the respective media.

In this example the total internal reflection takes place on the opposing surface of the light guide 104 to the in-coupling diffractive means 204. In this case $n_2$ is the refractive index of the light guide 104 and $n_1$ is the refractive index of the material on the other side of the light guide 104. The material on the other side of the light guide 104 could be air or thin film material.

In examples of the disclosure the second in-coupling diffractive means 204 is configured so that the diffraction angle for the first input beam of light 300A is smaller than the critical angle for total internal reflection but the diffraction angle for the second input beam of light 300B meets the condition for total internal reflection. Therefore the second input beam of light 300B that is in-coupled by the second in-coupling diffractive means 204 will propagate through the light guide 104 but light from the first input beam of light 300A that is in-coupled by the second in-coupling diffractive means 204 will escape the light guide 104.

This is shown in Fig. 4 where the second in-coupling diffractive means 204 is shown. The first input beam of light 300A in this example comprises red light (R), green light (G), and blue light (B). The angle of diffraction for the in-coupled red light 400 is $\theta_R$, the angle of diffraction for the in-coupled green light 402 is $\theta_G$, the angle of diffraction for the in-coupled blue light 404 is $\theta_B$. The second in-coupling diffractive means 204 is configured so that $\theta_R$, $\theta_G$, and $\theta_B$ are all smaller than the critical angle for total internal reflection.

The second input beam of light 300B in this example comprises IR light. The angle of diffraction for the in-coupled IR light 406 is $\theta_{IR}$ and satisfies the condition for total internal reflection.

Fig. 4 shows an example second in-coupling diffractive means 204 that is configured to in-couple a second input beam of light 300B into the light guide 104. The apparatus 200 can also comprise a first in-coupling diffractive means 202 that is configured to in-couple a first input beam of light 300A into the light guide 104. In such cases light in the first wavelength range that is in-coupled by the first in-coupling diffractive means 202 would meet the conditions for total internal reflection but light in the second wavelength range that is in-coupled by the first in-coupling diffractive means 202 would have sub-optimal TIR angle and/or low in-coupling efficiency.

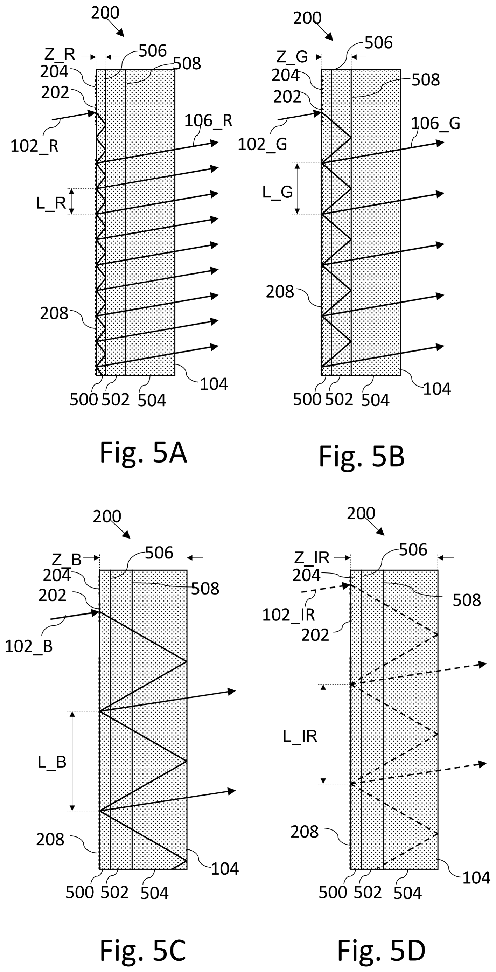

Figs. 5A to 5D show an example apparatus 200 that can be used in some examples of the disclosure. Figs. 5A to 5D show beams of light travelling through the example apparatus 200.

In the examples of Figs. 5A to 5D the apparatus 200 comprises a light guide 104. The light guide 104 comprises multiple layers. In this example the light guide 104 comprises a first layer 500, a second layer 502 and third layer 504. The light guide 104 could comprise other numbers of layers in other examples.

The respective layers 500, 502, 504 of the light guide 104 are arranged to enable light to be guided through the light guide 104 via internal reflections.

The apparatus 200 also comprises a first in-coupling diffractive means 202 and a second in-coupling diffractive means 204. The first in-coupling diffractive means 202 is configured to in-couple one or more input beams of light with a first wavelength range into the first layer 500 of the light guide 104. The second in-coupling diffractive means 204 is configured to in-couple one or more input beams of light with a second wavelength range into the first layer 500 of the light guide 104.

The apparatus 200 also comprises an out-coupling diffractive means 208. The out-coupling diffractive means 208 is configured to out-couple the one or more beams of light from the light guide 104. The in-coupling diffractive means 202, 204 and the out-coupling diffractive means 208 are provided on the first layer 500 of the light guide 104.

The apparatus 200 also comprises interfaces 506, 508 between the respective layers 500, 502, 504 of the light guide 104. The apparatus 200 comprises a first interface 506 between the first layer 500 and the second layer 502. In this example the first interface 506 is configured to reflect red light and allow blue and green light and IR light to pass through. The second interface 508 would reflect green light but allow blue light and IR light to pass through.

The interfaces 506, 508 can comprise a thin film material between respective layers 500, 502, 504 of the light guide 104. The thin film material can be optical adhesive or bonding material with relatively low refractive index. The thin film material can be arranged to only allow light with certain internal reflection angle and wavelength to pass through. For example, a thin film material provided at the first interface 506 in the example of Fig. 5A can be arranged to satisfy the condition for total internal reflection (TIR) so as to reflect red with a first internal reflection angle and allow green and blue light and IR light with a second internal reflection angle (and third and fourth reflection angle) to pass through.

In the example apparatus 200 the different layers 500, 502, 504 have different thicknesses. The different layers 500, 502, 504 can have different thicknesses and/or different refractive indices so that different wavelengths of light undergo different numbers of internal reflections as the light is guided from the in-coupling diffractive 202, 204 means towards the out-coupling diffractive means 208.

At least one of the relative thicknesses of the respective layers 500, 502, 504 and the refractive indices of the respective layers 500, 502, 504 are arranged so that the red light undergoes more internal reflections than the green light, blue light or IR light as the light is guided from the in-coupling diffractive means 202 towards the out-coupling diffractive means 208.

In some examples the materials used for the respective layers 500, 502, 506 of the light guide 104 can comprise materials selected to reduce at least one of: path length, absorption, and scattering of light. The selection of materials can take into account the relative efficiencies of the out-coupling diffractive means 208 for the different wavelengths of light. Different layers 500, 502, 506 of the light guide 104 can comprise different materials where the different materials can provide different path lengths, absorption, and scattering of light for respective wavelengths of light.

In the examples of Figs. 5A to 5D the different layers 500, 502, 504 have different thicknesses. In the example of Figs 5A to 5D the first layer 500 is thinner than the second layer 502 and the second layer 502 is thinner than the third layer 504. In some examples the different layers 500, 502, 504 can progressively increase in thickness from the first layer 500 in the light guide 104 to the last layer 504 in the light guide 104.

In the example of Fig. 5A an input beam of red light 102_R is shown. The input beam of red light 102_R is in-coupled to the first layer 500 of the light guide 104 by the first in-coupling diffractive means 202. The interface 506 between the first layer 500 and the second layer 502 is configured to reflect red light with a large internal reflection angle and allow blue light and green light and IR light with smaller internal reflection angles to pass through. The input beam of red light 102_R undergoes total internal reflection at the interface 506 between the first layer 500 and the second layer 502. The input beam of red light 102_R therefore stays in the first layer 500. The light guide 102 has an effective thickness of Z_R for the input beam of red light 102_R. The effective thickness Z_R in this example is the thickness of the first layer 500. The out-coupling diffractive means 208 provides and expanded beam of red light 106_R. The thickness and the refractive index of the first layer 500 as well as the parameters of the expanding diffractive means 206 and out-coupling diffractive means 208 are set to produce uniform intensity for the out-coupled expanded beam of red light 106_R.

The distance L_R indicates the total internal reflection length for the input beam of red light 102_R within the apparatus 200. The total internal reflection length is the distance between consecutive total internal reflections on the first surface of the first layer 500.

In the example of Fig. 5B an input beam of green light 102_G is shown. The input beam of green light 102_G is in-coupled to the first layer 500 of the light guide 104 by the first in-coupling diffractive means 202. The interface 508 between the second layer 502 and the third layer 504 is configured to reflect green light with a large internal reflection angle and allow blue light and IR light with smaller internal reflection angles to pass through. The input beam of green light 102_G undergoes total internal reflection at the interface 508 between the second layer 502 and the third layer 504. The input beam of green light 102_G therefore stays in the first layer 500 and the second layer 502. The light guide 102 has an effective thickness of Z_G for the input beam of green light 102_G. The effective thickness Z_R in this example is the combined thickness of the first layer 500 and the second layer 502. The effective thickness includes the thickness of any thin films or other materials between the respective layers 500, 502. The out-coupling diffractive means 208 provides and expanded beam of green light 106_G.

The distance L_G indicates the total internal reflection length for the input beam of green light 102_G within the apparatus 200. The total internal reflection length is the distance between consecutive total internal reflections on the first surface of the first layer 500. In this example the thickness and the refractive index of the second layer 502 is set so that the total internal reflection length for the input beam of green light 102_G is greater than the total internal reflection length for the red light. This is typically required for producing uniform intensity for the out-coupled expanded beam of green light 106_G.

In the example of Fig. 5C an input beam of blue light 102_B is shown. The input beam of blue light 102_B is in-coupled to the first layer 500 of the light guide 104 by the first in-coupling diffractive means 202. The interface 506 between the first layer 500 and the second layer 502 is configured to reflect red light with large internal reflection angle and allow blue light and green light and IR light with smaller internal reflection angles to pass through. Therefore, the input beam of blue light 102_B passes from the first layer 500 into the second layer 502. The interface 508 between the second layer 502 and the third layer 504 is configured to reflect green light with a large internal reflection angle and allow blue light and IR light with a smaller internal reflection angle to pass through. Therefore, the input beam of blue light 102_B passes from the second layer 502 into the third layer 504. The input beam of blue light 102_B undergoes total internal reflection at the outer surface of the third layer 504. The input beam of blue light 102_B undergoes total internal reflection in the light guide 104 comprising of the first layer 500, the second layer 502, and the third layer 504. The light guide 102 has an effective thickness of Z_B for the input beam of blue light 102_B. The effective thickness Z_B in this example is the combined thickness of the first layer 500, the second layer 502, and the third layer 504. The effective thickness includes the thickness of any thin films or other materials between the respective layers 500, 502, 504. The out-coupling diffractive means 208 provides and expanded beam of blue light 106_B.

The distance L_B indicates the total internal reflection length for the input beam of blue light 102_B within the apparatus 200. In this example the thickness and the refractive index of the third layer 504 is set so that the total internal reflection length for the input beam of blue light 102_B is greater than the total internal reflection length for the red light or green light. This means that there are fewer out-coupling instances of blue light than green light and red light in the out-coupling diffractive means 208. This is typically required for producing uniform intensity for the out-coupled expanded beam of blue light 106_B.

In the example of Fig. 5D an input beam of IR light 102_IR is shown. The input beam of IR light 102_IR is in-coupled to the first layer 500 of the light guide 104 by the second in-coupling diffractive means 204. The interface 506 between the first layer 500 and the second layer 502 is configured to reflect red light with large internal reflection angle and allow blue light and green light and IR light with smaller internal reflection angles to pass through. Therefore, the input beam of IR light 102_IR passes from the first layer 500 into the second layer 502. The interface 508 between the second layer 502 and the third layer 504 is configured to reflect green light with a large internal reflection angle and allow blue light and IR light with a smaller internal reflection angle to pass through. Therefore, the input beam of IR light 102_IR passes from the second layer 502 into the third layer 504. The input beam of IR light 102_IR undergoes total internal reflection at the outer surface of the third layer 504. The input beam of IR light 102_IR undergoes total internal reflection in the light guide 104 comprising of the first layer 500, the second layer 502, and the third layer 504. The light guide 102 has an effective thickness of Z_IR for the input beam of IR light 102_IR. The effective thickness Z_IR in this example is the combined thickness of the first layer 500, the second layer 502, and the third layer 504. The effective thickness includes the thickness of any thin films or other materials between the respective layers 500, 502, 504. The out-coupling diffractive means 208 provides and expanded beam of IR light 106_IR.

The distance L_IR indicates the total internal reflection length for the input beam of IR light 102_IR within the apparatus 200. The total internal reflection length for the input beam of IR light 102_IR is greater than the total internal reflection length for the red light or green light. The out-coupled beam of IR light 106_IR may not have uniform intensity. This is not critical as the illumination pattern can have large intensity variations and still be effective for tracking and monitoring of the user 110.

The example shown in Fig. 5D has large interval steps for the IR beams and provides a fairly sparce out-coupling for the expanded beams of IR light 106_IR. This could provide an IR gird with dots spaced far apart as an output. The second in-coupling diffractive means 204 could be configured to provide a different input angle which could result in smaller interval stapes and provide a denser out-coupled grid in the expanded beams of IR light 106_IR.

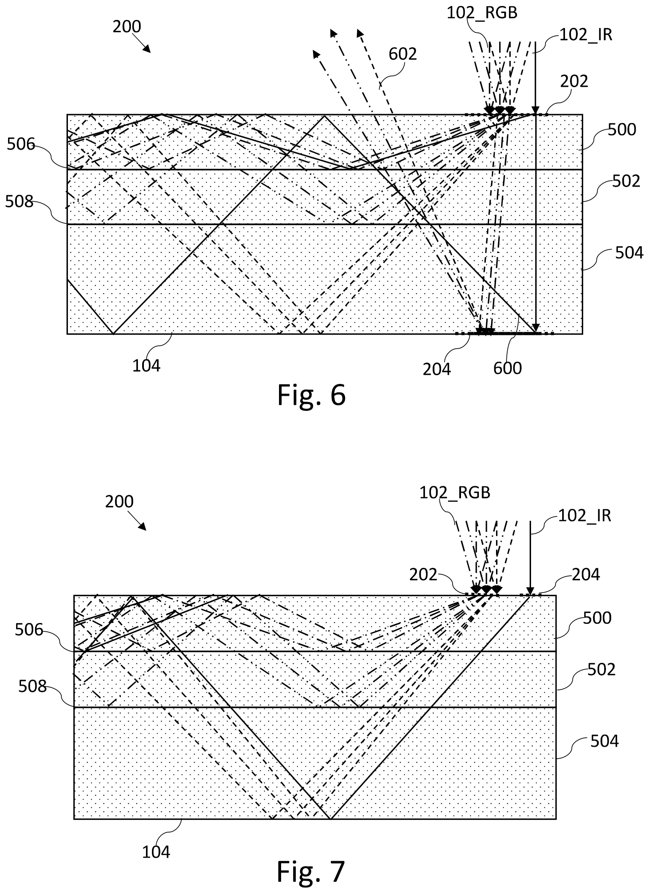

Fig. 6 shows another example apparatus 200 that could be used in examples of the disclosure. In this case the light guide 104 comprises three layers 500, 502, 504 which can be arranged as shown in Figs. 5A to 5D. In the example of Fig. 6 the first-in-coupling diffractive means 202 and the second in-coupling diffractive means 204 are provided on different surfaces of the light guide 104. In this case the first in-coupling diffractive means 202 is provided on the outer surface of the first layer 500 and the second in-coupling diffractive means 204 is provided on the outer surface of the third layer 504.

In this example the second in-coupling diffractive means 204 is positioned so that it overlaps with the first in-coupling diffractive means 202.

The first in-coupling diffractive means 202 is configured for in-coupling visible light 102_RGB and the second in-coupling diffractive means 204 in configured for in-coupling IR light 102_IR. For example, the different in-coupling diffractive means 202, 204 could have different periods or any other suitable parameters could be different. The respective in-coupling diffractive means could be configured to in-couple light with different wavelength ranges in other examples.

In this example the second in-coupling diffractive means 204 produces a diffracted IR beam 600 and a diffracted RGB beam 602. The second in-coupling diffractive means 204 is configured so that the angle of the diffracted IR beam 600 satisfies the conditions for total internal reflection but the angle of the diffracted RGB beam 602 does not satisfy the conditions for total internal reflection. The diffracted RGB beam 602 largely escapes the light guide 104. This can provide improved in-coupling for IR light while reducing ghost images from the RGB light.

Fig. 7 shows another example apparatus 200 that could be used in examples of the disclosure. In this case the light guide 104 also comprises three layer 500, 502, 504 which can be arranged as shown in Figs. 5A to 5D. In the example of Fig. 7 the first-in-coupling diffractive means 202 and the second in-coupling diffractive means 204 are provided on the same surface of the light guide 104. In this case the first in-coupling diffractive means 202 and the second in-coupling diffractive means 204 are provided adjacent to each other. The first in-coupling diffractive means 202 and the second in-coupling diffractive means 204 are provided on the outer surface of the first layer 500.

The first in-coupling diffractive means 202 is configured for in-coupling visible light 102_RGB and the second in-coupling diffractive means 204 in configured for in-coupling IR light 102_IR. For example, the different in-coupling diffractive means 202, 204 could have different periods or any other suitable parameters could be different. The respective in-coupling diffractive means could be configured to in-couple light with different wavelength ranges in other examples.

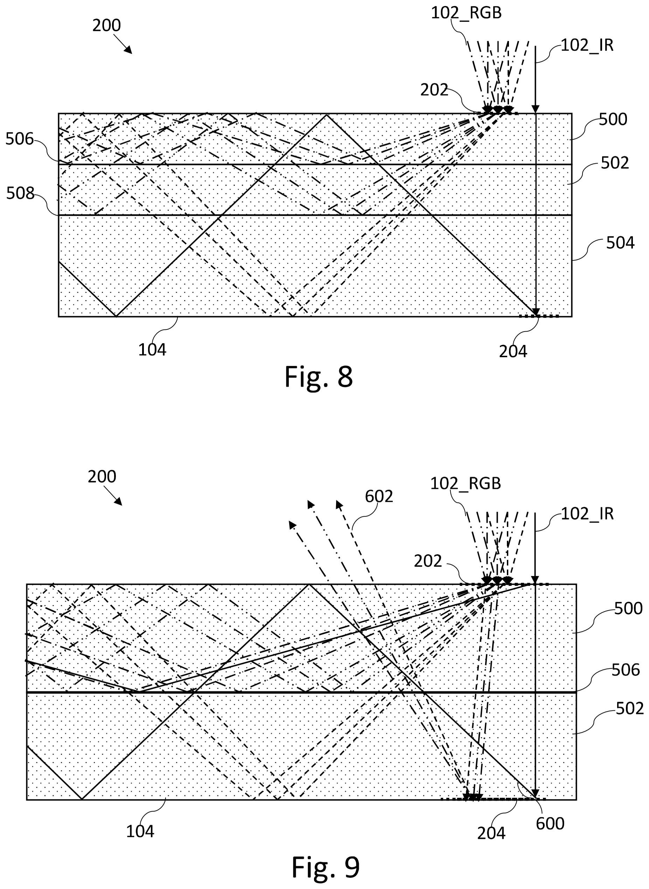

Fig. 8 shows another example apparatus 200 that could be used in examples of the disclosure. In this case the light guide 104 comprises three layer 500, 502, 504 which can be arranged as shown in Figs. 5A to 5D. In the example of Fig. 8 the first-in-coupling diffractive means 202 and the second in-coupling diffractive means 204 are provided on different surfaces of the light guide 104. In this case the first in-coupling diffractive means 202 is provided on the outer surface of the first layer 500 and the second in-coupling diffractive means 204 is provided on the outer surface of the third layer 504.

In this example the second in-coupling diffractive means 204 is positioned so that it does not overlap with the first in-coupling diffractive means 202. In this case the second in-coupling diffractive means 204 is provided to the side of the first in-coupling diffractive means 202. This can reduce in-coupling of RGB light by the second in-coupling diffractive means 204.

The first in-coupling diffractive means 202 is configured for in-coupling visible light 102_RGB and the second in-coupling diffractive means 204 in configured for in-coupling IR light 102_IR. For example, the different in-coupling diffractive means 202, 204 could have different periods or any other suitable parameters could be different. The respective in-coupling diffractive means could be configured to in-couple light with different wavelength ranges in other examples.

The second in-coupling diffractive means 204 is configured so that the angle of the diffracted IR beam satisfies the conditions for total internal reflection but the angle of the diffracted RGB beam does not satisfy the conditions for total internal reflection.

Fig. 9 shows another example apparatus 200 that could be used in examples of the disclosure. In this case the light guide 104 comprises two layers 500, 502, instead of three. In this case the interface 506 between the first layer 500 and the second 502 is configured to reflect red light and green light but to allow blue light and IR light to pass through.

In the example of Fig. 9 the first-in-coupling diffractive means 202 and the second in-coupling diffractive means 204 are provided on different surfaces of the light guide 104. In this case the first in-coupling diffractive means 202 is provided on the outer surface of the first layer 500 and the second in-coupling diffractive means 204 is provided on the outer surface of the second layer 502.

In this example the second in-coupling diffractive means 204 is positioned so that it overlaps with the first in-coupling diffractive means 202.

The first in-coupling diffractive means 202 is configured for in-coupling visible light 102_RGB and the second in-coupling diffractive means 204 in configured for in-coupling IR light 102_IR. For example, the different in-coupling diffractive means 202, 204 could have different periods or any other suitable parameters could be different. The respective in-coupling diffractive means could be configured to in-couple light with different wavelength ranges in other examples.

In this example the second in-coupling diffractive means 204 produces a diffracted IR beam 600 and a diffracted RGB beam 602. The second in-coupling diffractive means 204 is configured so that the angle of the diffracted IR beam 600 satisfies the conditions for total internal reflection but the angle of the diffracted RGB beam 602 does not satisfy the conditions for total internal reflection. The diffracted RGB beam 602 largely escapes the light guide 104. This can provide improved in-coupling for IR light while reducing ghost images from the RGB light.

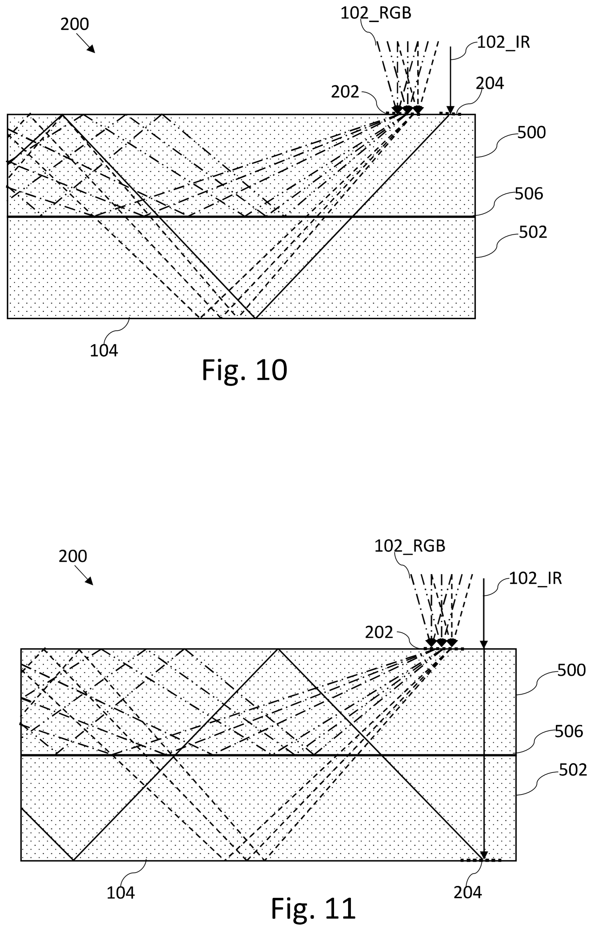

Fig. 10 shows another example apparatus 200 that could be used in examples of the disclosure. In this case the light guide 104 comprises two layers 500, 502 which can be arranged as shown in Fig. 9.

In the example of Fig. 10 the first-in-coupling diffractive means 202 and the second in-coupling diffractive means 204 are provided on the same surface of the light guide 104. In this case the first in-coupling diffractive means 202 and the second in-coupling diffractive means 204 are provided adjacent to each other. The first in-coupling diffractive means 202 and the second in-coupling diffractive means 204 are provided on the outer surface of the first layer 500.

The first in-coupling diffractive means 202 is configured for in-coupling visible light 102_RGB and the second in-coupling diffractive means 204 in configured for in-coupling IR light 102_IR. For example, the different in-coupling diffractive means 202, 204 could have different periods or any other suitable parameters could be different. The respective in-coupling diffractive means could be configured to in-couple light with different wavelength ranges in other examples.

Fig. 11 shows another implementation that could be used in examples of the disclosure. In this case the light guide 104 comprises two layers 500, 502 which can be arranged as shown in Fig. 9 and Fig.10.

In the example of Fig. 11 the first-in-coupling diffractive means 202 and the second in-coupling diffractive means 204 are provided on different surfaces of the light guide 104. In this case the first in-coupling diffractive means 202 is provided on the outer surface of the first layer 500 and the second in-coupling diffractive means 204 is provided on the outer surface of the second layer 502.

In the example of Fig. 11 the second in-coupling diffractive means 204 is positioned so that it does not overlap with the first in-coupling diffractive means 202. In this case the second in-coupling diffractive means 204 is provided to the side of the first in-coupling diffractive means 202. This can reduce in-coupling of RGB light by the second in-coupling diffractive means 204.

The first in-coupling diffractive means 202 is configured for in-coupling visible light 102_RGB and the second in-coupling diffractive means 204 in configured for in-coupling IR light 102_IR. For example, the different in-coupling diffractive means 202, 204 could have different periods or any other suitable parameters could be different. The respective in-coupling diffractive means could be configured to in-couple light with different wavelength ranges in other examples.

The second in-coupling diffractive means 204 is configured so that the angle of the diffracted IR beam satisfies the conditions for total internal reflection but the angle of the diffracted RGB beam does not satisfy the conditions for total internal reflection.

Variations to the example apparatus shown in Figs. 2 to 11 could be used in examples of the disclosure. For instance, third in-coupling diffractive means could be provided. This could be configured on an opposing side of the light guide 104 to the first in-coupling diffractive means and could be configured to in-couple light with a first wavelength range that has passed through at least part of the light guide 104.

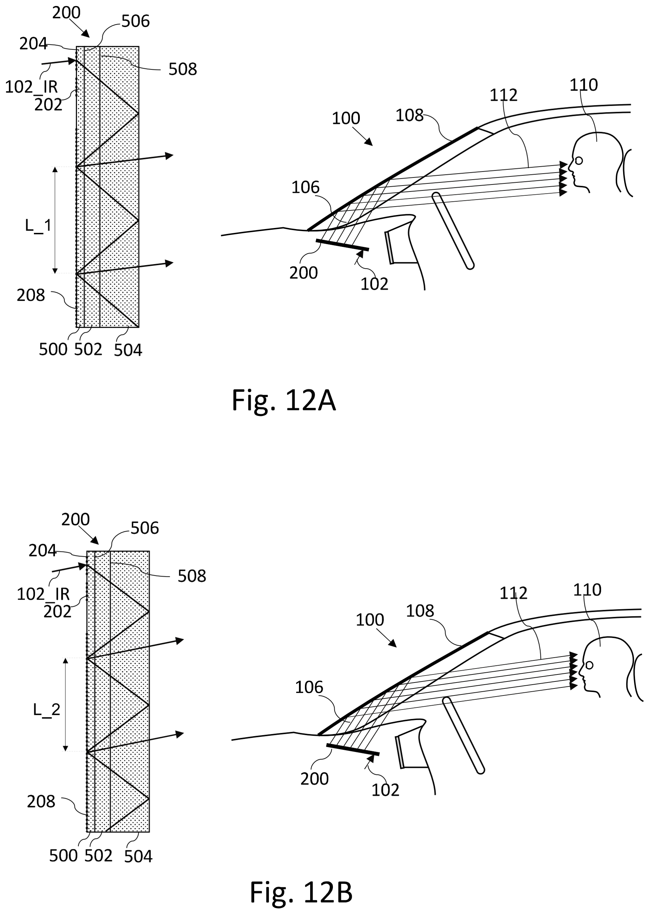

Figs. 12A and 12B show an example head up display 100 that could comprise an apparatus 200 according to examples of the disclosure. In this example the apparatus 200 is configured to enable the position of second exit pupil for the second wavelength range to be adjusted.

In this case the position of second exit pupil can be adjusted by changing the angle of the incident light of the second wavelength range. The angle of the incident light can be changed by changing the angle of the image generating unit with respect to the second in-coupling diffractive means 204 or by any other suitable means.

In the example of Fig.12A the input beam of light of the second wavelength is provided at a first incident angle. This provides a second exit pupil at a first position. In this case the first position is too low. It only illuminates the lower half of the face of the user 110. This might not be suitable for identification or tracking purposes.

In the example of Fig.12B the input beam of light of the second wavelength is provided at a second incident angle. The second angle can be provided by changing the angle of the image generating unit or by any other suitable means. This provides a second exit pupil at a second position. In this case the second position is higher than the first position. The second position illuminates all of the face of the user 110. This can be suitable for identification or tracking purposes.

The adjustment of the position of the second exit pupil can be used to account for different users 110 having different heights or to enable illumination of the user 110 for different purposes or for any other suitable purpose.

In some examples the light of the second wavelength can be used to determine a position of the user 110. Once the position of the user 110 has been determined the image generating unit for the first wavelength range can be adjusted to provide the first exit pupil at a suitable position of the user 110. Other responses can be made to the position of the user 110 in other examples.

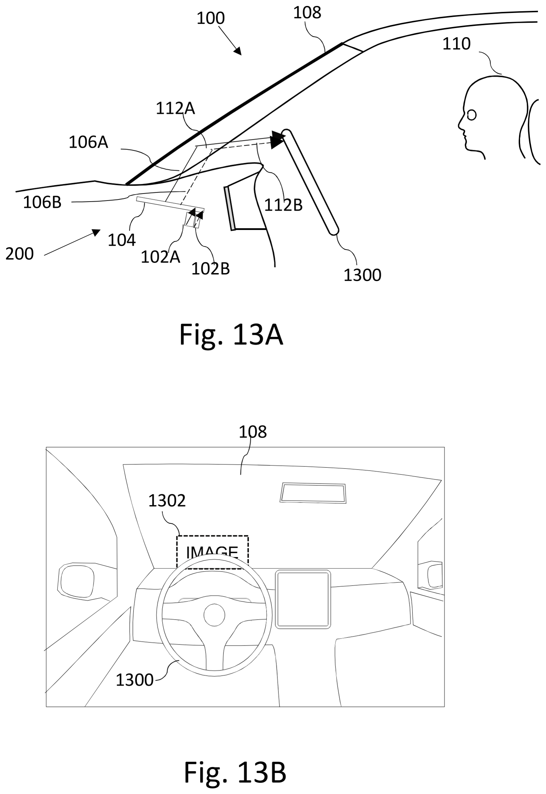

Figs. 13A to 13D show an example head up display 100 that comprises an apparatus 200 according to examples of the disclosure. Figs. 13A to 13D show how an example apparatus 200 can be used to adjust the position of the respective exit pupils.

Fig. 13A shows an example in which the apparatus 200 is arranged so that the first reflected beam 112A and the second reflected beam 112B are provided too low. This means that the exit pupils provided by the respective beams are blocked by the steering wheel 1300.

As shown in Fig. 13A that the second reflected beam 112B illuminates the steering wheel 1300 rather than the user 110. This also means that the virtual image 1302 provided by the first exit pupil is occluded, or partially occluded, by the steering wheel 1300. Fig. 13B shows the occlusion of the virtual image 1302 by the steering wheel 1300.

In this case the illumination provided by the second reflected beam 112B can be used to determine the apparatus 200 is arranged so that the first reflected beam 112A and the second reflected beam 112B are provided too low. For instance, a tracking system can detect that the second reflected beam 112B is incident on the steering wheel 1300. In response to this detection the apparatus 200 can be adjusted to change the angle at which the expanded beams of light 106A, 106B are directed towards the windshield 108. This changes the height of the respective reflected beams of light 112A, 112B.

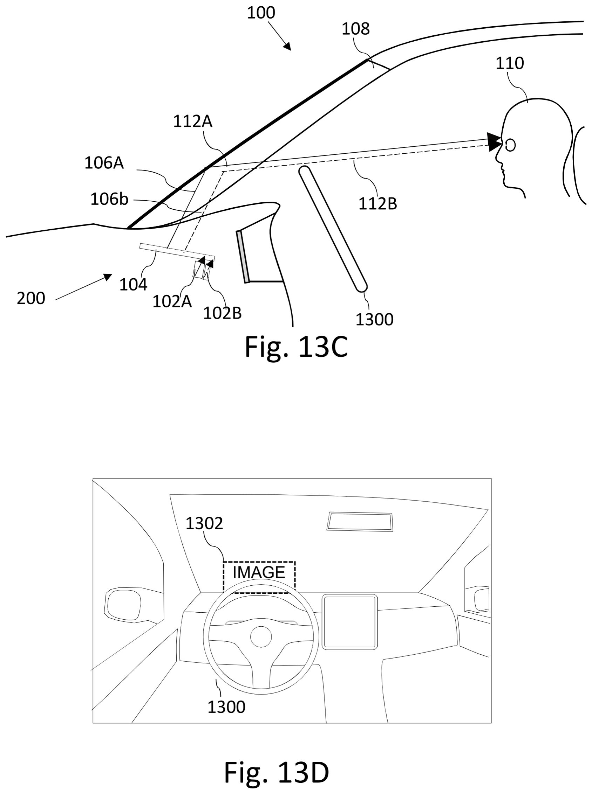

Figs. 13C and 13D show the HUD 100 after the apparatus 200 has been adjusted. This shows that the reflected beams of light 112A, 112B are now provided higher so that they pass over the steering wheel 1300. This enables the second reflected beam of light 112B to be used to illuminate the user 110. This also ensures that the virtual image 1302 provided by the first reflected beam of light 112A is not occluded by the steering wheel.

The adjustments to the apparatus 200 can comprise adjusting the angle at which the input beams of light are provided to the apparatus 200 or by any other suitable means.

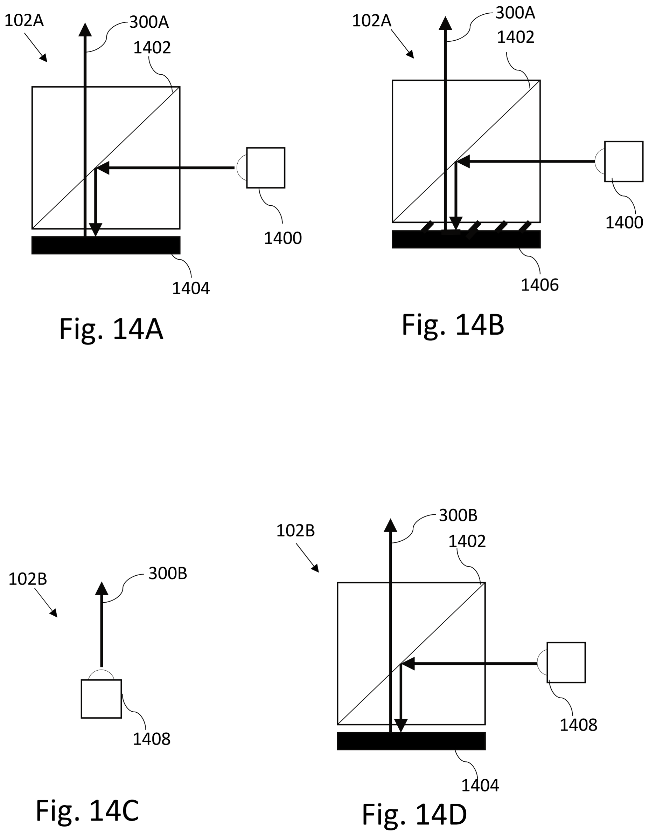

Figs. 14A to 14D show example image generating units 102 that can be used in examples of the disclosure. Figs. 14A and 14B show first image generating units 102A that provide a first input beam of light 300A. Figs. 14C and 14D show second image generating units 102B that provide a second input beam of light 300B. In this example the first input beam of light 300A comprises RGB light and the second input beam of light 300B comprises IR light. Other wavelengths of light could be used in other examples.

In the example of Fig. 14A the first image generating unit 102A comprises an RGB light source 1400, a beam splitter 1402 and a reflective liquid crystal on silicon (rLCoS) spatial light modulator (SLM) 1404. In the example of Fig. 14B the first image generating unit 102A comprises an RGB light source 1400, a beam splitter 1402 and a digital micromirror device (DMD) 1406. Other arrangements could be used in other examples. Additional illumination and projection lenses are not illustrated but can be used for generating collimated output light beams.

In the example of Fig. 14C the second image generating unit 102B comprises just an IR light source 1408. The IR light source 1408 could be an IR laser module. In the example of Fig. 14D the second image generating unit 102B comprises an IR light source 1408, a beam splitter 1402 and a rLCoS SLM 1404. The IR light source 1408 could be an IR light emitting diode (LED) module. Other arrangements could be used in other examples, for example a DMD 1406 could be used. Additional illumination and projection lenses are not illustrated but may be required for generating collimated output light beams.

The respective image generating units 102A, 102B can be provided in a HUD 100 in examples of the disclosure. For instance, in some examples a second image source 102B comprising just an IR light source 1408 as shown in Fig. 14C can be used in combination with a first image source 102A comprising a rLCoS SLM 1404 as shown in Fig. 14A or a first image source 102A comprising a DMD 1406 as shown in Fig. 14B. In other examples a second image source 102B comprising an IR light source 1408 and a rLCoS SLM 1404 as shown in Fig. 14D can be used in combination with a first image source 102A comprising a rLCoS SLM 1404 as shown in Fig. 14A or a first image source 102A comprising a DMD 1406 as shown in Fig. 14B. Such arrangements can provide partially separate light paths for the respect wavelengths of light.

Other types of image generating units 102 could be used in other examples. For example, a combined RGB and IR image generating unit 102 could be used. The combined RGB and IR image generating unit 102 can be arranged to provide either same or partially separate light paths for the respective wavelengths of light.

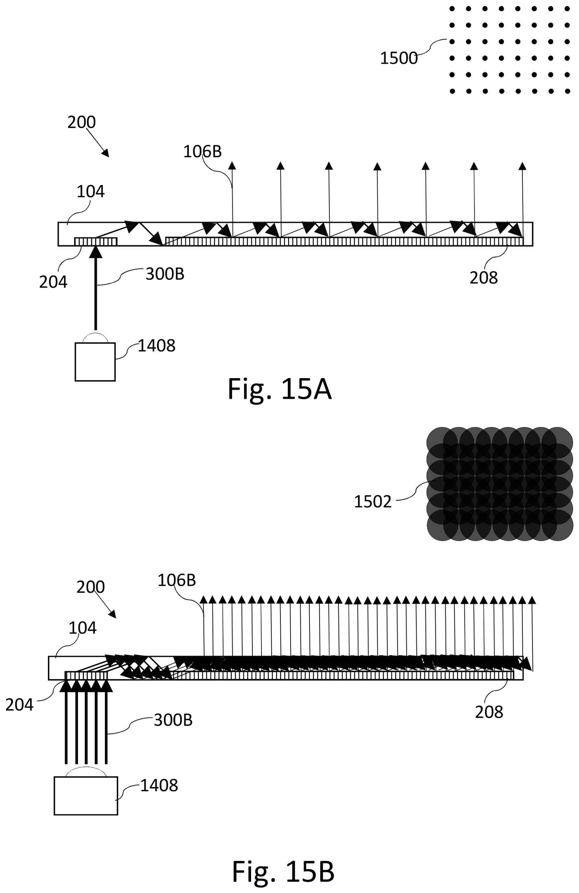

Figs. 15A and 15B show example projected patterns that can be provided for the second wavelength range in some examples of the disclosure.

In the example of Fig. 15A the IR light source 1408 provides a narrow second input beam of light 300B to the second in-coupling diffractive means 204 of the apparatus 200. The narrow input beam of light 300B provides a small exit pupil so that there is no overlap between the replicated pupils so that the output second expanded beam of light 106B comprises a structured and collimated grid 1500.

In the example of Fig. 15B the IR light source 1408 provides a wide second input beam of light 300B to the second in-coupling diffractive means 204 of the apparatus 200. The wide input beam of light 300B provides a large exit pupil so that the replicated pupils overlap so that the output second expanded beam of light 106B comprises a more uniform light field 1502.

In some examples the density of an output second expanded beam of light 106B can be controlled through the angle of internal reflection of the second in-coupling diffractive means 204 or via any other suitable means.

In some examples the size of the exit pupils provided by the apparatus can be arranged for the intended use of the apparatus 200. For instance, a different sized exit pupil could be provided when a structured grid 1500 is used compared to when a uniform field 1502 is used. If the second image generating unit 102B comprises LCoS or digital light processing displays, then an exit pupil size and position adjustment can be implemented by selecting which pixels are active on the display panel providing the IR illumination. Other means for adjusting the size of the exit pupil could be used in other examples.

The apparatus can be provided in an electronic device, for example, a mobile terminal, according to an example of the present disclosure. It should be understood, however, that a mobile terminal is merely illustrative of an electronic device that would benefit from examples of implementations of the present disclosure and, therefore, should not be taken to limit the scope of the present disclosure to the same. While in certain implementation examples, the apparatus can be provided in a mobile terminal, other types of electronic devices, such as, but not limited to: mobile communication devices, hand portable electronic devices, wearable computing devices, portable digital assistants (PDAs), pagers, mobile computers, desktop computers, televisions, gaming devices, laptop computers, cameras, video recorders, GPS devices and other types of electronic systems, can readily employ examples of the present disclosure. Furthermore, devices can readily employ examples of the present disclosure regardless of their intent to provide mobility. In some examples the apparatus can be provided within a vehicle or a cab for a vehicle.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to 'comprising only one...' or by using 'consisting.'

In this description, the wording 'connect', 'couple' and 'communication' and their derivatives mean operationally connected/coupled/in communication. It should be appreciated that any number or combination of intervening components can exist (including no intervening components), i.e., to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database, or another data structure), ascertaining and the like. Also, "determining" can include receiving (for example, receiving information), accessing (for example, accessing data in a memory), obtaining and the like. Also, "determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can', or 'may' refers to a particular instance in a class of examples. A property of the instance can be a property of only that instance or a property of the class or a property of a sub-class of the class that includes some but not all the instances in the class. It is therefore implicitly disclosed that a feature described with reference to one example but not with reference to another example, can where possible be used in that other example as part of a working combination but does not necessarily have to be used in that other example.

As used herein, "at least one of the following: " and "at least one of " and similar wording, where the list of two or more elements are joined by "and" or "or" mean at least any one of the elements, or at least any two or more of the elements, or at least all the elements.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

The description of a feature, such as an apparatus or a component of an apparatus, configured to perform a function, or for performing a function, should additionally be considered to also disclose a method of performing that function. For example, description of an apparatus configured to perform one or more actions, or for performing one or more actions, should additionally be considered to disclose a method of performing those one or more actions with or without the apparatus.

Although features have been described with reference to certain examples, those features may also be present in other examples whether described or not.

The term 'a', 'an' or 'the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance the Applicant may seek protection via the claims in respect of any patentable feature or combination of features hereinbefore referred to and/or shown in the drawings whether or not emphasis has been placed thereon.

**Claims**

1. An apparatus comprising:

a light guide arranged to enable light to be guided through the light guide via internal reflections;
first in-coupling diffractive means configured to in-couple one or more input beams of light with a first wavelength range into the light guide;
second in-coupling diffractive means configured to in-couple one or more input beams of light with a second wavelength range into the light guide;
expanding diffractive means configured to expand the one or more input beams of light; and
out-coupling diffractive means configured to out-couple the expanded beams of light from the light guide so as to provide a first exit pupil for the first wavelength range and a second exit pupil for the second wavelength range.

2. The apparatus as claimed in claim 1 wherein the first wavelength range comprises a visible wavelength range and the second wavelength range comprises an invisible wavelength range.

3. The apparatus as claimed in claim 2 wherein the invisible light comprises infra-red light.

4. The apparatus as claimed in any preceding claim wherein the position of at least one of the first exit pupil or the second exit pupil is adjustable.

5. The apparatus as claimed in any preceding claim wherein the first exit pupil and the second exit pupil are at least partially overlapping.

6. The apparatus as claimed in any preceding claim wherein the light with the second wavelength range is provided as at least one of:

structured light;
a grid;
a beam.

7. The apparatus as claimed in any preceding claim wherein the light with a second wavelength range is arranged for illuminating one or more objects near the apparatus.

8. The apparatus as claimed in any preceding claim wherein the first in-coupling diffractive means and the second in-coupling diffractive means have at least one of:

different fill ratio;
different depth;
different period;
different slant angles;
different materials.

9. The apparatus as claimed in any preceding claim wherein the light guide comprises a stack of layers and multiple interfaces between respective layers, wherein the respective layers are arranged to enable light to be guided through the light guide via internal reflections.

10. The apparatus as claimed in claim 9 wherein a thin film material is provided at the interfaces.

11. The apparatus as claimed in any preceding claim wherein the apparatus comprises a third in-coupling diffractive means configured to in-couple light within the first wavelength range that has passed through at least part of the light guide.

12. The apparatus as claimed in any preceding claim wherein the apparatus comprises a first image generating unit configured to provide the one or more input beams of light with a first wavelength range and a second image generating unit configured to provide the one or more input beams of light with a second wavelength range.

13. The apparatus as claimed in claim 12 wherein the second image generating unit is adjustable to enable an incident angle for the beams of light with a second wavelength range relative to the second in-coupling diffractive means to be adjusted.

14. The apparatus as claimed in any of claims 12 to 13 wherein at least one of the first image generating unit and the second image generating unit is adjustable to enable a position of an image to be adjusted.

15. The apparatus as claimed in any of claims 12 to 14 wherein the respective image generating units comprise one or more of:

reflective liquid crystal on silicon;
spatial light modulator;
digital micromirror device;
digital light processing.

Fig. 1

Fig. 2

Fig. 3

Fig. 4

200

Z_R
204
202
102_R
106_R
L_R
208
500 502 504
104
506
508

Fig. 5A

200

Z_G
204
202
102_G
106_G
L_G
208
500 502 504
104
506
508

Fig. 5B

200

Z_B
204
202
102_B
L_B
208
500 502 504
104
506
508

Fig. 5C

200

Z_IR
204
102_IR
202
L_IR
208
500 502 504
104
506
508

Fig. 5D

Fig. 6

Fig. 7

Fig. 8

Fig. 9

Fig. 10

Fig. 11

200
506
204
508
102_IR
202

L_1

208

500 502 504

## Fig. 12A

112
110
100
108
106
200
102

---

200
506
204
508
102_IR
202

L_2

208

500 502 504

## Fig. 12B

112
110
100
108
106
200
102

Fig. 13A

Fig. 13B

Fig. 13C

Fig. 13D

Fig. 14A

Fig. 14B

Fig. 14C

Fig. 14D

1500

200

106B

104

204    300B    208

1408

Fig. 15A

1502

106B

200

104

204    300B    208

1408

Fig. 15B

Europäisches
Patentamt

European
Patent Office

Office européen
des brevets

# EUROPEAN SEARCH REPORT

**Application Number**

EP 25 22 4397

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 12 001 017 B1 (LEE YUN-HAN [US] ET AL) 4 June 2024 (2024-06-04) <br> * figure 4 * <br> ----- | 1-3,5-8, 15 | INV. <br> G02B27/00 <br> G02B27/01 |
| X | US 2023/288713 A1 (NOUI LOUAHAB [GB] ET AL) 14 September 2023 (2023-09-14) <br> * figure 9 * <br> ----- | 1-10, 13-15 | |
| X | US 10 928 631 B1 (SHAHMOHAMMADI MOHSEN [US] ET AL) 23 February 2021 (2021-02-23) <br> * figures 4A, 4C * <br> ----- | 1-3, 5-12,15 | |

| | |
|---|---|
| | **TECHNICAL FIELDS SEARCHED (IPC)** |
| | G02B |

The present search report has been drawn up for all claims

| Place of search | Date of completion of the search | Examiner |
|---|---|---|
| Munich | 6 May 2026 | Serbin, Jesper |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 22 4397

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2026

| Patent document cited in search report | | Publication date | Patent family member(s) | | Publication date |
|---|---|---|---|---|---|
| US 12001017 | B1 | 04-06-2024 | NONE | | |
| US 2023288713 | A1 | 14-09-2023 | EP | 4242725 A1 | 13-09-2023 |
| | | | US | 2023288713 A1 | 14-09-2023 |
| US 10928631 | B1 | 23-02-2021 | US | 10928631 B1 | 23-02-2021 |
| | | | US | 11215818 B1 | 04-01-2022 |

EPO FORM P0459

For more details about this annex : see Official Journal of the European Patent Office, No. 12/82